# EUROPÄISCHE PATENTSCHRIFT

(11) **EP 3 353 833 B1**
(45) Veröffentlichungstag und Bekanntmachung des Hinweises auf die Patenterteilung: **09.12.2020**
(21) Anmeldenummer: 16705037.6
(22) Anmeldetag: 18.02.2016
(51) Int. Cl.: H01M 2/36

(54) **WASSERNACHFÜLLSTOPFEN FÜR BATTERIEN**
WATER REFILLING PLUG FOR BATTERIES
BOUCHON D'AJOUT D'EAU POUR BATTERIE

(30) Priorität: 23.09.2015 DE 102015012175
(43) Veröffentlichungstag der Anmeldung: 01.08.2018
(73) Patentinhaber: Frötek- Vermögensverwaltung GmbH, 37520 Osterode am Harz (DE)
(72) Erfinder: GRUPPE, Joachim, 37431 Bad Lauterberg (DE); HOOGESTRAAT, Gerd, 37431 Bad Lauterberg (DE); KOCH, Thomas, 37154 Northeim (DE); MATHES, Sebastian, 37589 Kalefeld (DE); STEFFAHN, Peter, 37431 Bad Lauterberg (DE); WENY, Sebastian, 34497 Korbach (DE)
(74) Vertreter: Cohausz Hannig Borkowski Wißgott
(86) Internationale Anmeldenummer: PCT/EP2016/000273
(87) Internationale Veröffentlichungsnummer: WO 2017/050399

(56) Entgegenhaltungen:
- DE-A1- 3 539 167
- RU-C1- 2 091 925
- US-A- 3 968 687
- US-A- 4 055 708
- US-A- 4 481 389
- US-B1- 8 564 390

## Beschreibung

Die Erfindung betrifft einen Wassernachfüllstopfen zur automatischen Be- und Nachfüllung der Zellen einer Batterie mit einem durch einen Schwimmer betätigten Ventilkörper, der bei gefüllter Batteriezelle das Ventil schließt, um das Nachfüllen zu beenden.

Bei der elektrischen Ladung von Batterien wird während der Ladung Wasser zersetzt. Um die Lebensdauer und die Leistungsfähigkeit der Batterie nicht zu verringern, muss deshalb regelmäßig Wasser in die Batteriezellen nachgefüllt werden. Dies geschieht häufig über Wassernachfüllstopfen, die in die Öffnung des Batteriedeckels eingesteckt sind und mit Hilfe von Schläuchen in Reihe geschaltet sind. Diese Wassernachfüllstopfen schließen automatisch, wenn der Füllstand in den Batteriezellen die gewünschte Höhe erreicht hat. Der Füllstand in den Zellen wird häufig mit Hilfe von Schwimmkörpern ermittelt. Dabei wird der Weg des Schwimmers über ein Gestänge zum Ventilstößel übertragen, so dass das Ventil schließt, wenn der gewünschte Füllstand erreicht ist, wie es aus der WO 83/00260 bekannt ist.

In den Batteriezellen kommt es als Folge der Lade- und Entladevorgänge zur Bildung von Verunreinigungen, die auf der Elektrolytoberfläche schwimmen und sich auf den Teilen der Nachfüllstopfen ablagern, die im Kontakt zum Elektrolyten geraten. Dies kann zum Verkleben des Gestänges und damit zu einer Fehlfunktion des Nachfüllstopfens führen.

Aus der DE 3539167 A1 ist ein Wassernachfüllstopfen bekannt, bei dem der obere Kopf des Schwimmers den Ventilkörper bildet und in seiner oberen Stellung im Ventilsitz dichtend einliegt. Hierbei steht am Kopf des Schwimmers ein Halteelement nach oben vor, das in der oberen Stellung mit einem ferromagnetischen Teil an einem Permanentmagneten anliegt, um in dieser Stellung festgehalten zu sein. Ein Lösen erfolgt durch einen über die Nachfüllleitung geführten Druckimpuls.

Aus der US 8 564 390 B1 ist ein schwimmerbetätigter Füllstandsschalter bekannt, dessen Schwimmer seitlich eines Ventils angeordnet ist und über eine zwei Permanentmagnete aufweisende waagerechte Mechanik das Ventil betätigt. Ferner ist es aus der US 4 481 389 A bekannt, ein Ventil über eine waagerechte Mechanik durch einen Schwimmer zu betätigen.

Aufgabe der Erfindung ist es, einen Wassernachfüllstopfen zu schaffen, der bei einfacher Konstruktion auch bei Verunreinigungen des Elektrolyten eine ausfallsichere Funktion gewährleistet.

Diese Aufgabe wird erfindungsgemäß dadurch gelöst,
- dass der Schwimmer (11) unterhalb des Ventilkörpers (4) angeordnet ist,
- dass der Ventilkörper (4) ein Schließteil (4a) aufweist, das senkrecht beweglich ist, um den Ventilsitz (14) zu erreichen,
- dass eine nach oben offene Buchse (17) das Schließteil (4a) führt,
- dass vom Schließteil (4a) sich ein Ventilkörperstößel (4b) sich senkrecht nach oben erstreckt, an dessen oberen ende ein Führungsteil (3) sitzt, dass in einer nach unten offenen Ausnehmung des Gehäuses (15) geführt ist,
- dass zwischen dem Ventilkörper und dem Schwimmer eine permanent magnetische Kraft besteht, durch die die Bewegung des Schwimmers auf den Ventilkörper übertragen wird.

Bei dieser Lösung ist ein Gestänge zwischen Ventilkörper (bzw. Ventilstellglied) und Schwimmer nicht erforderlich, so dass auch bei Verunreinigungen des Elektrolyten es zu einem Verklemmen oder Blockieren nicht kommen kann und damit eine sichere Funktion über lange Zeiten gegeben ist.

Hierbei ist von Vorteil, dass Ventilkörper und Schwimmer miteinander mechanisch nicht verbunden sind.

Eine besonders einfache Konstruktion bei hoher Funktionssicherheit ist dann gegeben, wenn am oder im Ventilkörper und am oder im Schwimmer jeweils ein Permanentmagnet angeordnet ist, wobei die Magnete so gepolt befestigt sind, dass sie einander abstoßen, so dass ein Anheben des Schwimmers zu einem Anheben des Ventilkörpers in seine Schließstellung führt.

Eine vorteilhafte alternative Lösung besteht darin, dass am oder im Ventilkörper ein Permanentmagnet oder ein Teil aus ferromagnetischem Material angeordnet ist und am oder im Schwimmer ein Permanentmagnet angeordnet ist, der durch seine Anziehungskraft den Ventilkörper bewegt.

Eine andere vorteilhafte alternative Lösung besteht darin, dass am oder im Schwimmer ein Permanentmagnet oder ein Teil aus ferromagnetischem Material angeordnet ist und am oder im Ventilkörper ein Permanentmagnet angeordnet ist, der durch die magnetische Anziehungskraft vom Schwimmer bewegt wird.

Vorzugsweise wird vorgeschlagen, dass der Permanentmagnet und/oder das Teil aus ferromagnetischem Material ringförmig sind. Ein sicherer Halt des Ventilkörpers in seiner Schließstellung ist dann gegeben, wenn der Ventilkörper durch die Fließkraft des nachströmenden Wassers in Richtung seiner Schließstellung beaufschlagt ist.

Ausführungsbeispiele der Erfindung sind in den Zeichnungen dargestellt und werden im Folgenden näher beschrieben. Es zeigen
- Fig. 1: einen senkrechten axialen Schnitt durch eine erste Ausführungsform des Wassernachfüllstopfens,
- Fig. 2: einen senkrechten axialen Schnitt durch eine zweite Ausführungsform des Wassernachfüllstopfens.

Der Wassernachfüllstopfen 1 besitzt ein im Wesentlichen zylindrisches Gehäuse 15, das in die Öffnung eines Batteriedeckels oberhalb einer Batteriezelle eingesteckt wird. Auf der Außenseite des Gehäuses liegt ein Dichtring 10 in einer Ringnut ein, um den Stopfen in der Öffnung des Batteriedeckels abzudichten. An der Oberseite des Stopfens ist ein T-Verbindungsstück 7 eingesteckt, an dem Wasserschläuche angesteckt sind, über die destilliertes Wasser über das T-Stück zum Inneren des Stopfens geführt wird.

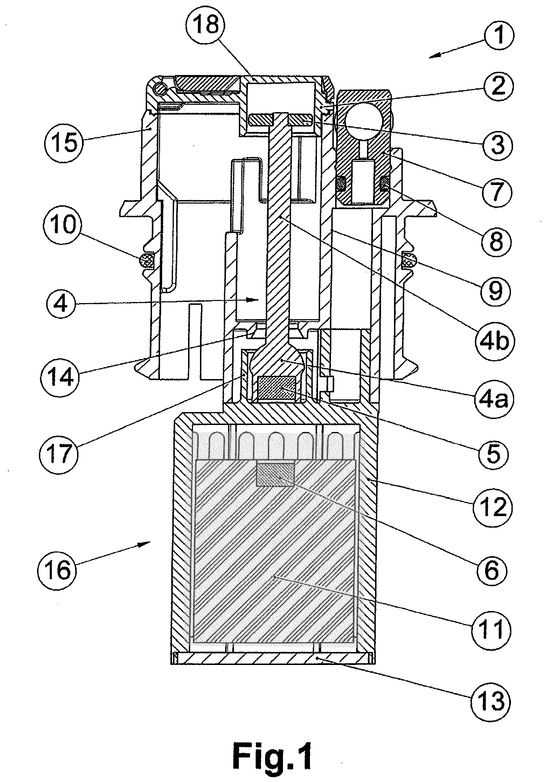

An der Unterseite des Gehäuses 15 ist ein Schwimmergehäuse 16 befestigt, das einen Korb 12 mit Boden 13 für einen Schwimmer 11 bildet, der senkrecht beweglich ist und durch den Elektrolyten aus der in Fig. 1 dargestellten unteren Lage in eine oberen Lage beweglich ist. Im oder am oberen Bereich des Schwimmers 11 ist ein erster Permanentmagnet 6 befestigt.

Das Schwimmergehäuse 16 bildet auf seiner Oberseite eine nach oben senkrecht vorstehende, nach oben offene Buchse 17, in der das untere verdickte Ende eines senkrecht verschieblichen Ventilkörpers 4 einliegt, wobei das untere Ende das Schließteil 4a des Ventilkörpers bildet. Die Buchse 17 führt das Schließteil 4a in seiner senkrechten Bewegung nach oben bis das Schließteil 4a einen Ventilsitz 14 erreicht und verschließt, der von einem Gehäuseinnenrohr 9 des Gehäuses 15 gebildet ist. Vom Schließteil 4a erstreckt sich ein Ventilkörperstößel 4b senkrecht nach oben, an dessen oberen Ende ein Führungsteil (3) sitzt, das in einer nach unten offenen Ausnehmung des Gehäuses 15 geführt ist.

Im Schließteil 4a des Ventilkörpers 4 ist ein zweiter Permanentmagnet 5 befestigt, der senkrecht über dem ersten Permanentmagnet 6 angeordnet ist. Wird der Batteriezelle über das T-Stück 7 und über den Stopfen 1 Wasser nachgefüllt, so steigt der Schwimmer 11 mit seinem Magnet 6 hoch. Da die einander zugewandten Pole beider Magnete 5, 6 dieselbe Polarität besitzen, stoßen die beiden Magnete einander ab und der Schwimmermagnet 6 drückt den Schließteilmagnet 5 nach oben, bis das Ventil aus den Teilen 4 und 14 geschlossen ist und der Wasserzufluss gestoppt ist.

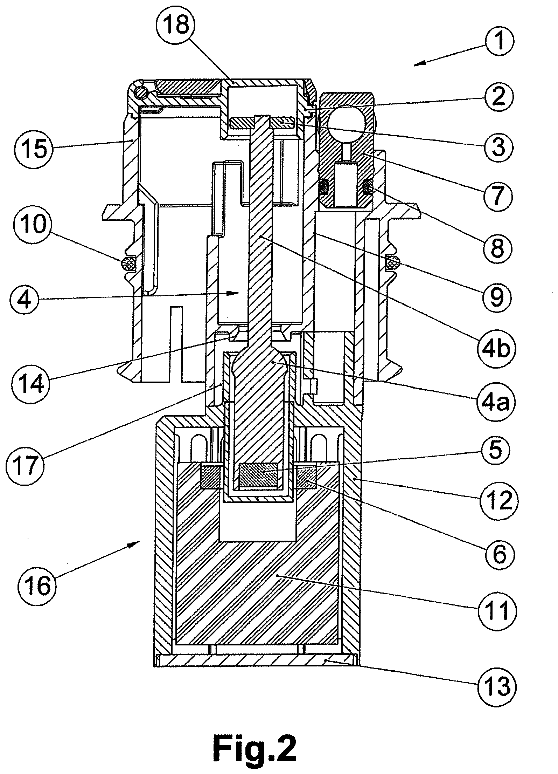

Die in Fig. 2 gezeigte Ausführungsform unterscheidet sich von der ersten u.a. dadurch, dass nur noch ein Permanentmagnet 5vorhanden ist, der auf ein Teil aus ferromagnetischem Material mit Anziehungskraft einwirkt. Hierbei bewirkt ein Anheben des Schwimmers 11 wiederum ein Anheben des Ventilkörpers 4. In Fig. 2 ist dargestellt, dass der Permanentmagnet 5 an dem Schließteil 4a und das Teil 6 aus ferromagnetischem Material an dem Schwimmer 11 angeordnet ist. Statt dessen kann aber auch der Permanentmagnet an dem Schwimmer und das Teil aus ferromagnetischem Material an dem Schließteil befestigt sein. In beiden Ausführungen wird die magnetische Anziehungskraft genutzt, um durch den Schwimmer 11 den Ventilkörper 4 nach oben zu bewegen, um bei ausreichend hohem Flüssigkeitsspiegel des Elektrolyts das Ventil zu schließen.

Der Permanentmagnet und/oder das Teil aus ferromagnetischem Material können ringförmig sein, so dass das andere Teil durch den Ring hindurch gesteckt ist. Auch kann das durch das Ventil 4, 14 hindurch strömende destillierte Wasser so geführt sein, dass der Ventilkörper (4) durch die Fließkraft des nachströmenden Wassers in Richtung seiner Schließstellung beaufschlagt und sicher gehalten ist.

## Patentansprüche

1. Wassernachfüllstopfen zur automatischen Be- und Nachfüllung der Zellen einer Batterie mit einem durch einen Schwimmer (11) betätigten Ventilkörper (4), der bei gefüllter Batteriezelle das Ventil schließt, um das Nachfüllen zu beenden,
**dadurch gekennzeichnet,**
- **dass** der Schwimmer (11) unterhalb des Ventilkörpers (4) angeordnet ist,
- **dass** der Ventilkörper (4) ein Schließteil (4a) aufweist, das senkrecht beweglich ist, um den Ventilsitz (14) zu erreichen,
- **dass** eine nach oben offene Buchse (17) das Schließteil (4a) führt,
- **dass** vom Schließteil (4a) sich ein Ventilkörperstößel (4b) sich senkrecht nach oben erstreckt, an dessen oberen Ende ein Führungsteil (3) sitzt, das in einer nach unten offenen Ausnehmung des Gehäuses (15) geführt ist,
- **dass** zwischen dem Ventilkörper (4) und dem Schwimmer (11) eine permanent magnetische Kraft besteht, durch die die Bewegung des Schwimmers auf den Ventilkörper übertragen wird.

2. Wassernachfüllstopfen nach Anspruch 1, **dadurch gekennzeichnet, dass** Ventilkörper (4) und Schwimmer (11) mechanisch unverbunden sind.

3. Wassernachfüllstopfen nach Anspruch 1 oder 2, **dadurch gekennzeichnet, dass** am oder im Ventilkörper (4) und am oder im Schwimmer (11) jeweils ein Permanentmagnet (5, 6) angeordnet ist, wobei die Magnete so gepolt befestigt sind, dass sie einander abstoßen, so dass ein Anheben des Schwimmers zu einem Anheben des Ventilkörpers in seine Schließstellung führt.

4. Wassernachfüllstopfen nach Anspruch 1 oder 2, **dadurch gekennzeichnet, dass** am oder im Ventilkörper (4) ein Permanentmagnet (5) oder ein Teil aus ferromagnetischem Material angeordnet ist und am oder im Schwimmer (11) ein Permanentmagnet (5) angeordnet ist, der durch seine Anziehungskraft den Ventilkörper bewegt.

5. Wassernachfüllstopfen nach Anspruch 1 oder 2, **dadurch gekennzeichnet, dass** am oder im Schwimmer (11) ein Permanentmagnet (6) oder ein Teil aus ferromagnetischem Material angeordnet ist und am oder im Ventilkörper (4) ein Permanentmagnet (5) angeordnet ist, der durch die magnetische Anziehungskraft vom Schwimmer bewegt wird.

6. Wassernachfüllstopfen nach einem der vorherigen Ansprüche, **dadurch gekennzeichnet, dass** der Permanentmagnet (6) und/oder das Teil aus ferromagnetischem Material ringförmig sind.

7. Wassernachfüllstopfen nach einem der vorherigen Ansprüche, **dadurch gekennzeichnet, dass** der Ventilkörper (4) durch die Fließkraft des nachströmenden Wassers in Richtung seiner Schließstellung beaufschlagt ist.

## Claims

1. Water replenishment plug for automatic filling and replenishment of the cells of a battery, having a valve body (4) which is actuated by a float (11) and which, for a filled battery cell, closes the valve in order to end the replenishment process, **characterized**
- **in that** the float (11) is arranged below the valve body (4),
- **in that** the valve body (4) has a closing part (4a) which is vertically movable in order to reach the valve seat (14),
- **in that** an upwardly open bushing (17) guides the closing part (4a),
- **in that** a valve body plunger (4b) extends vertically upwards from the closing part (4a), at the upper end of which valve body plunger there is seated a guide part (3) which is guided in a downwardly open recess of the housing (15),
- **in that**, between the valve body (4) and the float (11), there is a permanent magnetic force by which the movement of the float is transmitted to the valve body.

2. Water replenishment plug according to Claim 1, **characterized in that** the valve body (4) and the float (11) are not connected mechanically.

3. Water replenishment plug according to Claim 1 or 2, **characterized in that** in each case one permanent magnet (5, 6) is arranged on or in the valve body (4) and on or in the float (11), wherein the magnets are fastened so as to be polarized in such a way that they repel one another, with the result that lifting of the float leads to lifting of the valve body in its closed position.

4. Water replenishment plug according to Claim 1 or 2, **characterized in that** a permanent magnet (5) or a part composed of ferromagnetic material is arranged on or in the valve body (4), and a permanent magnet (5) is arranged on or in the float (11) and moves the valve body by its force of attraction.

5. Water replenishment plug according to Claim 1 or 2, **characterized in that** a permanent magnet (6) or a part composed of ferromagnetic material is arranged on or in the float (11), and a permanent magnet (5) is arranged on or in the valve body (4) and is moved by the magnetic force of attraction of the float.

6. Water replenishment plug according to one of the preceding claims, **characterized in that** the permanent magnet (6) and/or the part composed of ferromagnetic material are/is annular.

7. Water replenishment plug according to one of the preceding claims, **characterized in that** the valve body (4) is acted on in the direction of its closed position by the flow force of the water flowing in.

## Revendications

1. Bouchon de recharge d'eau destiné à remplir et recharger automatiquement des éléments d'une batterie, ledit bouchon comprenant un corps de clapet (4) qui est actionné par un flotteur (11) et qui ferme le clapet lorsque l'élément de batterie est plein pour terminer la recharge,
**caractérisé en ce que**
- le flotteur (11) est disposé au-dessous du corps de clapet (4),
- le corps de clapet (4) comporte une partie de fermeture (4a) qui peut être déplacée verticalement pour atteindre le siège de clapet (14),
- une douille (17) ouverte vers le haut guide la partie de fermeture (4a),
- un poussoir de corps de clapet (4b), à l'extrémité supérieure duquel se trouve une partie de guidage (3), s'étend verticalement depuis la partie de fermeture (4a) vers le haut, laquelle partie de guidage est guidée dans un évidement du boîtier (15) ouvert vers le bas,
- une force magnétique permanente, permettant de transmettre le mouvement du flotteur au corps de clapet, entre le corps de clapet (4) et le flotteur (11) .

2. Bouchon de recharge d'eau selon la revendication 1, **caractérisé en ce que** le corps de clapet (4) et le flotteur (11) ne sont pas reliés mécaniquement.

3. Bouchon de recharge d'eau selon la revendication 1 ou 2, **caractérisé en ce qu**'un aimant permanent (5, 6) est disposé sur ou dans le corps de clapet (4) et sur ou dans le flotteur (11), les aimants étant fixés de manière polarisée de façon à se repousser de sorte que le soulèvement du flotteur entraîne un soulèvement du corps de clapet jusque dans sa position de fermeture.

4. Bouchon de recharge d'eau selon la revendication 1 ou 2, **caractérisé en ce qu**'un aimant permanent (5) ou une partie en matériau ferromagnétique est disposé sur ou dans le corps de clapet (4) et un aimant permanent (5), qui déplace le corps de clapet par sa force d'attraction, est disposé sur ou dans le flotteur (11).

5. Bouchon de recharge d'eau selon la revendication 1 ou 2, **caractérisé en ce qu**'un aimant permanent (6) ou une partie en matériau ferromagnétique est disposé sur ou dans le flotteur (11) et un aimant permanent (5), qui est déplacé par la force d'attraction magnétique du flotteur, est disposé sur ou dans le corps de clapet (4) .

6. Bouchon de recharge d'eau selon l'une des revendications précédentes, **caractérisé en ce que** l'aimant permanent (6) et/ou la partie en matériau ferromagnétique sont annulaires.

7. Bouchon de remplissage d'eau selon l'une des revendications précédentes, **caractérisé en ce que** le corps de clapet (4) est sollicité par la force d'écoulement de l'eau entrante en direction de sa position de fermeture.
